# EUROPEAN PATENT SPECIFICATION

(11) **EP 2 879 413 B1**
(45) Date of publication and mention of the grant of the patent: **03.05.2017**
(21) Application number: 14172382.5
(22) Date of filing: 13.06.2014
(51) Int. Cl.: H04W 4/04, H04L 29/08

(54) **AVN for vehicle and mobile device**
AVN für ein Fahrzeug und mobile Vorrichtung
AVN pour véhicule et dispositif mobile

(30) Priority: 25.11.2013 KR 20130144092
(43) Date of publication of application: 03.06.2015
(73) Proprietor: Hyundai Motor Company, Seoul 137-938 (KR); Kia Motors Corporation, Seoul 137-938 (KR); Obigo Inc., Gyeonggi-do 463-400 (KR)
(72) Inventor: Kwon, Sun Woo, Seoul 152-755 (KR); Kim, Han Chul, Seoul 135-838 (KR); Song, Byung Soo, Busan 604-857 (KR); Han, Doo Hyun, Gyeonggi-do 463-812 (KR)
(74) Representative: Isarpatent

(56) References cited:
- US-A1- 2003 078 986
- US-A1- 2013 304 795
- US-B1- 6 453 259
- ANDY GRYC ET AL: 'HTML5 - die Zukunft des In-Car Infotainment?', [Online] 11 January 2012, XP055087128 Retrieved from the Internet: <URL:http://www.qnx.de/download/feature.htm l?programid=23199> [retrieved on 2013-11-07]

## Description

### BACKGROUND

### Field of the invention

The present invention relates to an audio, video and navigation (AVN) for a vehicle and a mobile device.

### Description of the Prior Art

Today, a vehicle serves as a transportation means and also operates as a multimedia device playing music or an image outing device based on various passenger requests. In addition, as mobile devices such as a smart phone, a tablet personal computer (PC), and the like are being distributed widely, an interest for a technology that allows a user mobile device to be connected with the vehicle has increased. From US 2003/0078986 A1 a multimedia distribution kiosk is known which can communicate with a remote user to receive multimedia requests and can communicate with a multimedia content provider to obtain requested multimedia content.

### SUMMARY

Accordingly, the present invention provides an AVN for a vehicle and a mobile device in which a user may more easily and safely use contents of a server regardless of an operating system of the AVN for a vehicle or the mobile device. The invention provides an AVN for a vehicle installed within the vehicle device as recited in claim 1, a mobile device as recited in claim 6, an AVN for a vehicle installed within the vehicle as recited in claim 9, and a non-transitory computer readable medium as recited in claim 11. Preferred embodiments of the invention are set out in the dependent claims.

In one aspect of the present invention an audio, video and navigation (AVN) for a vehicle installed within the vehicle may include: a network searching unit configured to search for a network around the AVN (within a predetermined range of the AVN); a communication unit configured to request transmission of content pages to a server via the network and receive the content pages in response to the request; a controller configured to provide a browser that displays the content pages; and a display unit configured to display the content pages, wherein contents transmitted from the server may be used through the content pages, and the AVN for a vehicle may be configured to provide information for authentication to the server to receive the content pages from the server.

The communication unit may be configured to transmit the request together with any one of an application used in the vehicle AVN, the vehicle, or information of the vehicle AVN at the time of the request of transmission of the content pages to the server. The communication unit may further be configured to communicate with the server via a hypertext transfer protocol secure (HTTPS) protocol and transmit a controlling signal generated via a user interface (UI) provided from the content pages based on user manipulation to the server. In addition, the communication unit may be configured to receive the content pages or content changed based on a request signal from the server. The vehicle AVN may further include a vehicle controller configured to operate the vehicle, wherein the communication unit may receive a manipulating signal that operates the vehicle from the server, and the vehicle controller may operate the vehicle based on the received manipulating signal.

In another aspect of the present invention, a mobile device may include: a server configured to provide content pages created by hypertext markup language (HTML5) characteristics; a memory configured to store content usable through the content pages; a communication unit configured to transmit and receive data to and from an external device; and an authentication unit configured to determine whether the request is generated through a permitted application or device when receiving a request of the content pages from the external device. When the authentication unit determines that the request is generated by the permitted application or device, the communication unit may be configured to transmit the content pages to the external device, and transmit the content stored in the memory to the external device based on a controlling signal from a user on the content pages. The communication unit may be configured to provide the Internet network accessible to the server from the external device. The server may be configured to transmit different content pages to the external device based on an authentication result by the authentication unit.

In another aspect of the present invention, an audio, video and navigation (AVN) for a vehicle installed within the vehicle may include: a server configured to provide content pages created by HTML5 characteristics; a memory configured to store content usable through the content pages; a display controller configured to provide a browser that displays the content pages; and a display unit configured to display the content pages, wherein content transmitted from the server may be used through the content pages.

The vehicle AVN may further include: a communication unit configured to provide the Internet network accessible to the server from an external device and transmit and receive various controlling signals and data via the Internet network; and an authentication unit configured to determine whether the request is generated through a permitted application or device in response to receiving a request of the content pages from the external device, wherein when the authentication unit determines that the request is generated by the permitted application or device, the communication unit may be configured to transmit the content pages to the external device, and transmit the content stored in the memory to the external device based on a controlling signal from a user on the content pages.

### BRIEF DESCRIPTION OF THE DRAWINGS

The above and other objects, features and advantages of the present invention will be more apparent from the following detailed description taken in conjunction with the accompanying drawings, in which:
FIG. 1 is an exemplary view schematically showing a system according to exemplary embodiments of the present invention;
FIG. 2 is an exemplary block diagram showing a configuration of a system according to a first exemplary embodiment of the present invention;
FIG. 3 is an exemplary flow chart showing an operation of a system according to a first exemplary embodiment of the present invention;
FIG. 4 is an exemplary block diagram showing a configuration of a system according to a second exemplary embodiment of the present invention;
FIG. 5 is an exemplary flow chart showing an operation of a system according to a second exemplary embodiment of the present invention; and
FIG. 6 is an exemplary block diagram showing a configuration of a system according to a third exemplary embodiment of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Since the present invention may be variously modified and have several exemplary embodiments, specific exemplary embodiments will be shown in the accompanying drawings and be described in detail in a detailed description. However, it is to be understood that the present invention is not limited to the specific exemplary embodiments, but includes all modifications, equivalents, and substitutions included in the spirit and the scope of the present invention. When it is determined that the detailed description of the known art related to the present invention may obscure the gist of the present invention, the detailed description thereof will be omitted. Hereinafter, exemplary embodiments of the present invention will be described in detail with reference to the accompanying drawings.

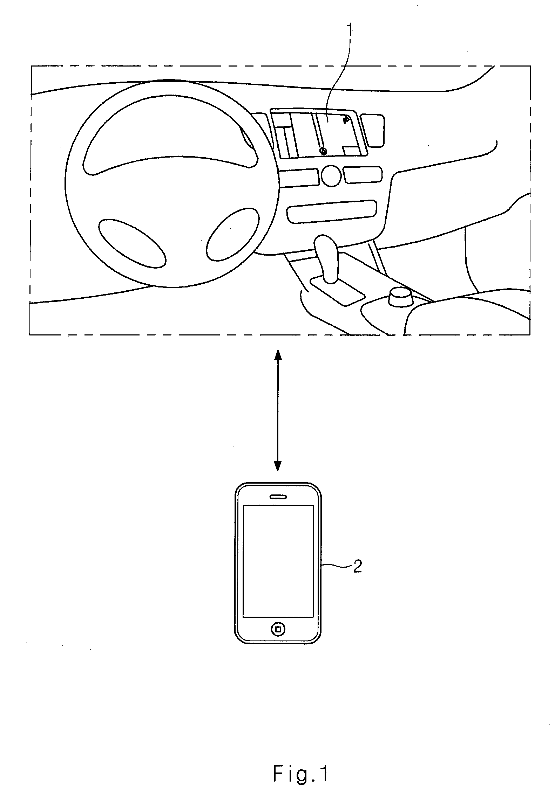

FIG. 1 is an exemplary view schematically showing a system according to exemplary embodiments of the present invention. Referring to FIG. 1, an audio, video and navigation (AVN) system capable of sharing contents, data, or the like may include a vehicle AVN 1 and a mobile device 2.

In particular, the AVN 1 may be executed by a processor and mounted on a dashboard or the like of the vehicle to provide various information to a passenger. The AVN 1 may provide content or information to the passenger and may be connected to other apparatuses to provide content or information to the passenger. For example, the AVN 1 may be configured to display a navigation screen, images, moving images, a screen capable of manipulating the vehicle, or the like on a display. In addition, the AVN 1 may be connected to a speaker disposed within the vehicle to play music. Further the AVN 1 may be connected to a driving system or a controlling system of the vehicle to operate the vehicle.

The mobile device 2 may be connected to the AVN 1 via a communication network, that is, a wireless or wired network to share content or data with the AVN 1, play content through the AVN 1 , or operate the vehicle through the AVN 1. A server that provides the content page on a web may be included in at least one of the AVN 1 and the mobile device 2 to transmit and receive content, various data, controlling signals, manipulating signals, and the like to and from each other through content pages.

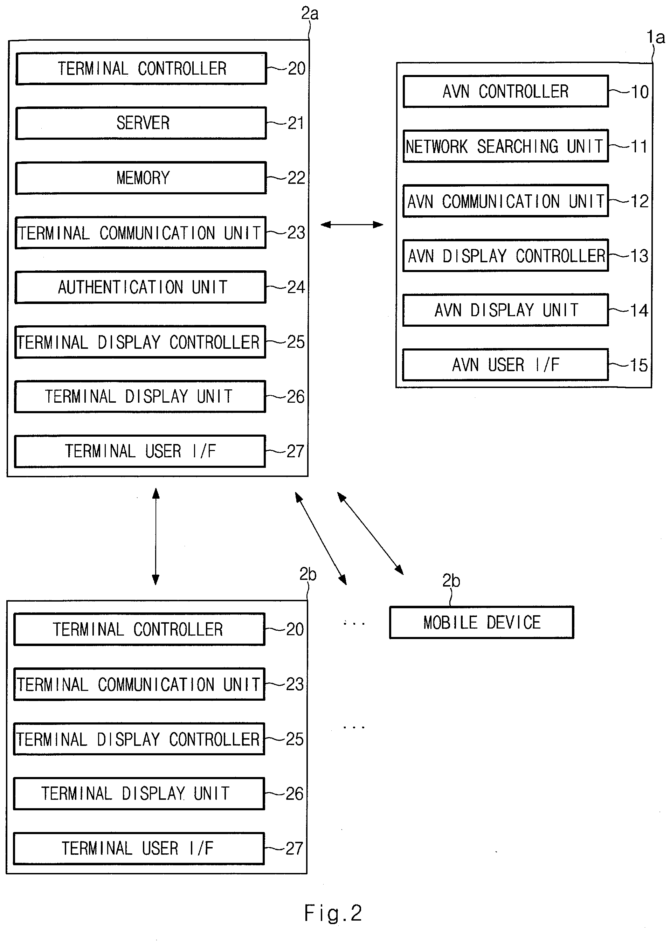

Hereinafter, various exemplary embodiments of the present invention will be described. FIG. 2 is an exemplary block diagram showing a configuration of a system according to a first exemplary embodiment of the present invention. Referring to FIG. 2, the present AVN system may include a mobile device 2a including a server 21, a plurality of mobile devices 2b which do not include the server 21, and a vehicle AVN 1a. First, the mobile device 2a will be described.

The mobile device 2a that includes the server 21 may be configured to provide content pages to a plurality of mobile devices 2b or the AVN 1a and provide various content, data or manipulating signals through the content pages. The mobile device 2a may include a terminal controller 20, a server 21, a memory 22, a terminal communication unit 23, an authentication unit 24, a terminal display controller 25, a terminal display unit 26, and a terminal user I/F 27.

The terminal controller 20 may be configured to operate the mobile device 2a by operating the respective portions in the mobile device 2a. The server 21, which may be a web server, may be configured to provide the content pages to an external device accessed via a communication network. The server 21 may be configured to create the content pages using HTML5 characteristics. In addition, the server 21 may be configured to provide different content pages based on an authentication result for the accessed external device. In other words, the server 21 may not collectively provide the same content pages to the accessed external device, but may be configured to provide a different content page based on a security level of the accessed external device.

For example, when the mobile device 2b which is not present in a pre-stored list accesses the server 21, then the server 21 may be configured to determine that the accessed external device has a lowest security level. Therefore, the server 21 may be configured to provide the content pages capable of being shared in the device having all security levels, for example, a page related to a music play. Additionally, when the AVN 1a, which may be a subject of content sharing, accesses the server 21, the server 21 may be configured to determine that the accessed AVN 1a has a highest security level. Therefore, the server 21 may be configured to provide various types of content pages to the AVN 1a. For example, the server 21 may be configured to provide the content pages related to the music play or a play of other multimedia, as well as content pages that operate the vehicle, for example, elements of a wiper, a conditioning device, and the like or driving system parts of a steering apparatus, a driving apparatus, and the like.

The provided content pages may include a user interface (UI) configured to receive a user input and when the server 21 receives the generated control signal via the UI included in the content page provided to the external device, the server 21 may be configured to sense an occurrence of event to perform an operation that corresponds to the event. The corresponding operation may be a change in the content page, a change in the contents, or a generation of the manipulating signal for controlling the vehicle. The memory 22 may be configured to store various content that the external device receiving the content page provided by the server 21 may use through the content page. Various content stored in the memory 22 may include music, moving images, pictures, and the like.

The terminal communication unit 23 may be configured to transmit the content pages from the server 21 and the content from the memory 22 to the external device accessed externally via the communication network. In addition, the terminal communication unit 23 may be configured to receive a transmitting request of the content pages or the content from the external device to transmit the content pages or the content to the server 21, the terminal controller 20, or the like. Meanwhile, the terminal communication unit 23 may be configured to provide an Internet network that enables an access to the server 21, that is, the communication network around (e.g., within the range of) the mobile device 2a. The terminal communication unit 23 may be configured to provide the communication network, such that the AVN 1a and the mobile device 2b, which are various external devices located around the mobile device 2a, may access the server 21 to request the transmission of the contents pages.

The authentication unit 24 may be configured to determine whether the external device accessed via the terminal communication unit 23 is a permitted device. In other words, when the AVN 1a and the mobile device 2b, which are the external device, request the transmission of the content pages and the content and the terminal communication unit 23 receives the request, the authentication unit 24 may be configured to determine whether the request is generated through a permitted application, a permitted device, or a device mounted in a permitted vehicle.

Moreover, the server 21 may be configured to prevent an external abnormal access (e.g., unauthorized access) using a proxy in playing the content through the content pages. In addition, the server 21 may be configured to perform communication via a HTTPS protocol to encrypt a data packet transmitted and received at the time of the communication and further strengthen security. Further, by performing the above-mentioned authentication operation, only the permitted mobile devices 2a and 2b may be allowed to access the device API around the AVN 1a to prevent an improper access to the operation of the vehicle, to improve security of the vehicle and safety of the passenger.

When the authentication unit 24 determines that the request from the external device is the request generated by the permitted application, or the like, the terminal communication unit 23 may be configured to transmit the content pages, the content, and the like to the external device. In addition, when the authentication unit 24 determines that the controlling signal from the external device is the signal generated by the permitted application, or the like, the terminal communication unit 23 may be configured to transmit the content pages from the server 21 or the content stored in the memory 22 to the external device based on the controlling signal from the user. Further, the content pages or the content already transmitted or currently transmitting may be changed to other content pages or content.

The terminal display controller 25 may be configured to operate the terminal display unit 26 of the mobile device 2a to display the content pages of the server 21 and the content stored in the memory 22. The terminal display unit 26 may be configured to display the content pages and the content provided through the terminal display controller 25. In particular, the terminal display unit 26 may be configured to display a browser provided via the terminal controller 20, or the like and may be configured to display the content pages and the content via the displayed browser. The terminal user I/F 27 may be configured to generate the controlling signal based on the user input. For example, the terminal user I/F 27 may be a touch screen, a physical button, and the like of a smart phone, a tablet PC, or the like.

Next, the vehicle AVN 1a will be described. The AVN 1a may be mounted within the vehicle to provide various information to the passenger and may operate as a relay to remotely operate the vehicle. The AVN 1a may include an AVN controller 10, a network searching unit 11, an AVN communication unit 12, an AVN display controller 13, an AVN display unit 14, and the AVN user I/F 15. The AVN controller 10 may be configured to operate the AVN 1a by operating the respective portions in the AVN 1a. In addition, when the signal transmitted from the server 21 is the manipulating signal for operating the vehicle, the AVN controller 10 may be configured to operate various parts of the vehicle connected to the AVN 1a to operate as the vehicle controller to operate the vehicle.

The network searching unit 11 may be configured to search for a network around (e.g., in the vicinity of or within a range of) the AVN 1a, that is, the communication network. In other words, when the AVN 1a is started and the browser is executed and displayed via the ANV display unit 14 described blow, the network searching unit 11 may be configured to search for a surrounding network to access to the server 21 that provides the content pages and the content to be displayed via the browser. Once the network searching unit 11 searches for the network, the AVN communication unit 12 may be configured to access the searched network to request the transmission of the content pages to the server 21. In addition, the AVN communication unit 12 may be configured to receive the content pages transmitted based on the transmitted request.

In particular, the AVN controller 10 may be configured to transmit information for authentication together with the request via the AVN communication unit 12 to receive the content pages from the server 21. Information for authentication may be information that indicates that the request is generated by an authenticated application, an authenticated AVN 1a, or the AVN 1a mounted within an authenticated vehicle. Further, the AVN controller 10 may be configured to perform communication via a HTTPS protocol to encrypt data packet transmitted and received at the time of the communication and further strengthen security. In addition, by performing the above-mentioned authentication operation, only the permitted mobile devices 2a and 2b may be allowed to access the device API around the AVN 1a to prevent an improper access to the operation of the vehicle, to improve security of the vehicle and safety of the passenger.

The AVN display controller 13 may be configured to operate the AVN display unit 14 of the AVN 1a to display the content pages of the server 21 and the content stored in the memory 22 received from the AVN communication unit 12. The AVN display unit 14 may be configured to display the content pages and the content provided via the AVN display controller 13. In particular, the AVN display unit 14 may be configured to display a browser provided via the AVN controller 10, or the like and may be configured to display the content pages and the content via the displayed browser. The AVN user I/F 15 may be configured to generate the controlling signal based on the user input. For example, the AVN user I/F 15 may be a touch screen, a physical button, and the like of a smart phone, a tablet PC, or the like.

Next, a difference between the mobile device 2b and the mobile device 2a will be described. The mobile device 2b has almost the same configuration as the mobile device 2a, but is different from the mobile device 2a in that the mobile device 2b does not include the server 21 that may be configured to provide the content pages, the memory 22 configured to store the content, and the authentication unit 24. It may not be necessary to remove the above-mentioned configurations from the mobile device 2b and the mobile device 2b may include all the above-mentioned configurations, which do not merely correspond to essential components.

The terminal controller 20 of the mobile device 2b may be configured to transmit information that indicates whether a request which is transmitted to perform an authentication operation with the mobile device 2a is a request generated through the permitted application or the permitted mobile device 2b, together with the request, similar to the AVN controller 10 of the vehicle AVN 1a. Since the mobile device 2a may be configured to display the content pages, the content, or the like by receiving them from the server 21 disposed within the mobile device 2a, the authentication operation may be omitted.

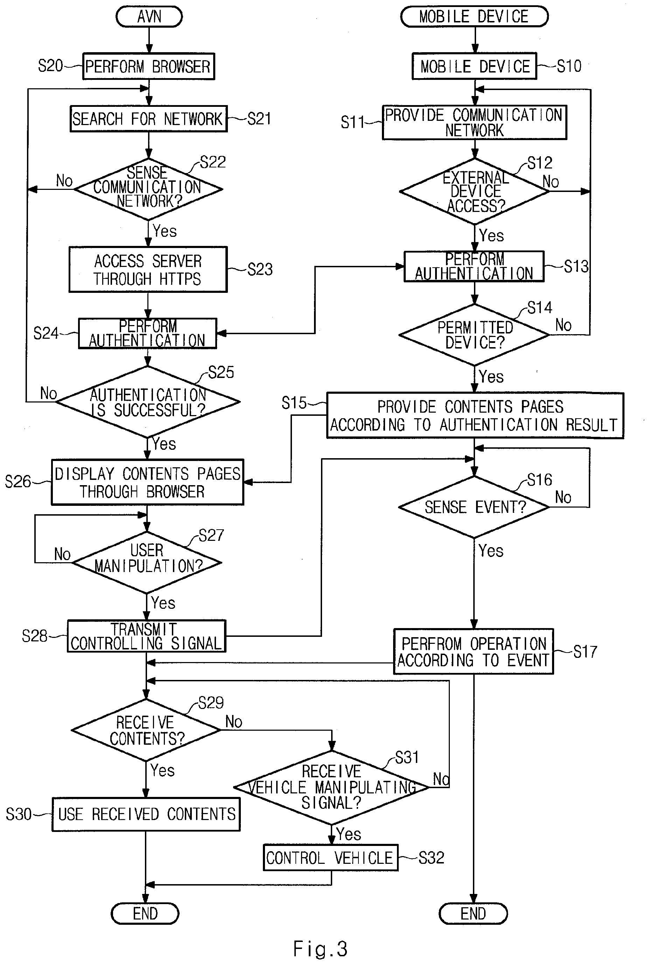

Hereinafter, operations of the vehicle AVN 1a and the mobile devices 2a and 2b will be described in detail. FIG. 3 is an exemplary flow chart showing an operation of a system according to a first exemplary embodiment of the present invention.

First, describing an operation of the mobile device 2a side with reference to FIG. 3, the mobile device 2a including the server 21 may be configured to operate the server 21 when being turned on or based on a user manipulation (S10). In addition, simultaneously with the operation of the server 21 or regardless of the operation of the server 21, the terminal communication unit 23 may be configured to provide the Internet network, that is, the communication network around, to allow the access to the server 21 (S11). For example, the communication network such as WiFi, wired and wireless LAN, or the like may be provided.

The terminal controller 20 and the like of the mobile device 2a may be configured to determine whether there is an external device intended to access via the communication network (S12). When the accessed external device is not present, the operation may return to S11, and when the accessed external device is present, an authentication operation determining whether the external device is a permitted device may be performed (S13). For example, it may be determined whether the signal, or the like requesting the transmission of the content pages is generated through the permitted application, the permitted device, or the device mounted in the permitted vehicle.

As an authentication result, in response to determining that the external device is not the permitted device, the access to the server 21 may not be permitted ('No' of S14), and in response to determining that the external device is the permitted device, the access to the server 21 may be permitted and the content pages may be provided to the external device based on the authentication result (S15). In other words, different content pages may be provided based on the authentication result. For example, the provided content pages may be classified based on the security level and the content pages may be provided differently based on the security level of the external device determined by the authentication result.

The server 21 may be configured to determine whether the controlling signal is transmitted by any manipulation in the external device and an event is generated after the server 21 performs the authentication and access to the external device (S16). In addition, when the server 21 senses the event, the server 21 may be configured to perform an operation based on the sensed event and transmit the generated result and the like to the external device (S17). For example, when the server 21 receives the controlling signal that changes the content pages from the external device, the server 21 may be configured to transmit the content pages based on the received controlling signal to the external device. When the server 21 receives the controlling signal that operates the vehicle, the server 21 may be configured to transmit the manipulating signal to operate the vehicle to the vehicle AVN.

Further, an operation of the AVN 1a for the vehicle will be described. When the vehicle is turned on or started, or by the passenger manipulation of the vehicle, the browser that may be configured to display the content pages on the AVN display unit 14 of the AVN 1a may be executed (S20). After the execution of the browser, the AVN communication unit 12, operated by a processor, may be configured to search for the networks present around the AVN communication unit 12 (S21). When the AVN communication unit 12 senses the network, that is, the communication network (Yes of S22), the AVN communication unit 12 may be configured to access the server 21 via the HTTPS protocol (S23). In addition, the AVN communication unit 12 may be configured to perform an authentication operation transmitting necessary information enabling the server 21 to perform the authentication operation together with the request of the contents pages (S24). Information for authentication may be information indicating that the request is generated by an authenticated application, an authenticated AVN 1a, or the AVN 1a mounted within an authenticated vehicle.

When the authentication fails ('No' of S25), the operation may return to S21 to repeat the operation. On the other hand, when the authentication is successful ('Yes' of S25), the content pages may be received from the server 21 and the received content pages may be displayed via the browser (S26). Thereafter, the passenger of the vehicle may perform the manipulation for operating various multimedia devices installed within the vehicle, various functions of navigation and the like mounted in the AVN 1a, and the operation of the vehicle via the displayed content pages. When the manipulation of the passenger is performed (S27), the AVN 1a may be configured to transmit the controlling signal generated based on the user manipulation to the server 21 via the AVN communication unit 12 (S28).

After transmitting the controlling signal, when the content is received ('Yes' of S29), the received content may be used in the content pages (S30). For example, when the received contents is the moving image, the moving image may be output via the AVN display unit 24. In particular, the output of the moving image may be performed in a streaming scheme. Additionally, when the received content is music, the music may be played through a speaker connected to the AVN 1a.

Moreover, after transmitting the controlling signal, when the manipulating signal that operates the vehicle is received ('Yes' of S31), the AVN 1a may be configured to operate the vehicle having the AVN 1a mounted therein (S32). For example, the AVN 1a may be configured to start the vehicle or operate the wiper. Alternatively, the AVN 1a may be configured to operate heating wires of a windshield or a handle. The controllable operations of the vehicle are exemplary, are not limited to the above-mentioned operations, and may include all operations related to the operation of the vehicle. When no data or signal is received, the reception of data or signal may be continuously waited (e.g., held until a signal or data is received) ('No' of S29 and 'No' of S31). Although the types of data received after transmitting the controlling signal mention only the contents and the manipulating signal, the type of data are not limited thereto.

When the content pages need to be changed by the passenger manipulation, new content pages may be provided from the server 21 and may be newly displayed on the browser. Furthermore, although the operation of the mobile device 2b is not described in the description with respect to FIG. 3, since it approximately corresponds to the operation of the AVN 1a, the detailed description thereof will be omitted. However, in the mobile device 2b, the execution of the browser will be performed by the power of the mobile device 2b or the user manipulation, regardless of the power or start of the vehicle. In addition, since the mobile device 2b is not a configuration mounted within the vehicle, the configuration determining whether the manipulating signal of the vehicle is received to operate the vehicle as in S31 and S32 is omitted.

As described above, in connecting the AVN 1a to the mobile device 2a that includes the server 21, the content pages created by HTML5 characteristics may be used, thereby making it possible to use the content pages in all platforms having the browser mounted therein. In addition, since the content may be shared via the content pages created by HTML5 characteristics, the AVN 1a may use the exemplary embodiments of the present invention when having only the browser function since a separate program need not be installed and may provide the service in multiple media formats provided from a client by using the content pages created by HTML5 characteristics.

Further, security may be strengthened by communication via the HTTPS protocol, prevention of the abnormal (e.g., unauthorized) access using the proxy, and the authentication of the application or the device requesting the content pages, and it may also be possible to remotely operate the vehicle in portions in which it were difficult to actually use due to a security problem. In other words, by using the exemplary embodiments of the present invention, peripheral devices associated with the multimedia within the vehicle as well as the manipulation system or the control system may be remotely controlled.

Meanwhile, although the present exemplary embodiment describes the configuration in which one AVN 1a and the plurality of mobile devices 2b may access one server 21 (or one mobile device 2a), an access form of the devices is not limited thereto. A plurality of AVNs 1a may access one server 21. The plurality of AVNs 1a may not simultaneously access the server 21 and when the AVN 1a accesses the server 21, the server 21 may be configured to determine a model or a manufacturer of the vehicle having the AVN 1a mounted therein to provide the content pages that correspond to the model or the manufacturer. For example, the server 21 may be configured to determine whether the manufacturer of the vehicle having the AVN 1a mounted therein is Kia Motors Corporation or Hyundai Motor Company to provide the content pages that correspond to the manufacturer of each vehicle.

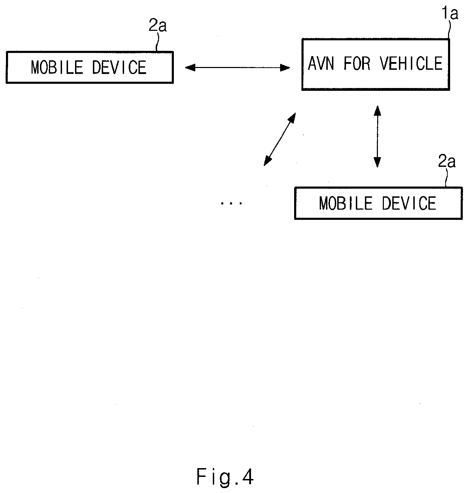

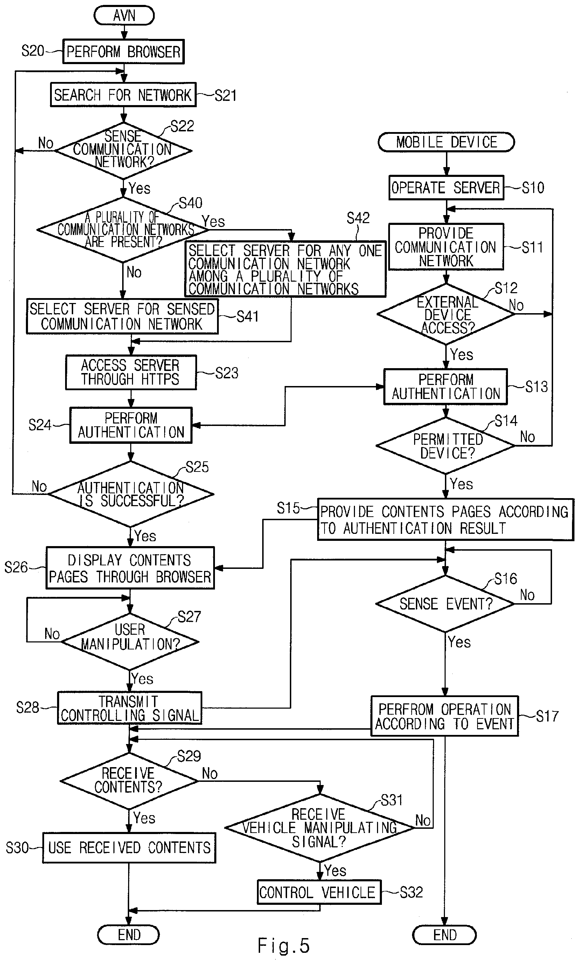

FIG. 4 is an exemplary block diagram showing a configuration of a system according to a second exemplary embodiment of the present invention and FIG. 5 is an exemplary flow chart showing an operation of a system according to a second exemplary embodiment of the present invention. Referring to FIG. 4, the present AVN system may include a plurality of mobile devices 2a that include a server 21 and a vehicle AVN 1a. In other words, the present AVN system may include a plurality of servers 21 present on the periphery. In addition, since an operation of the mobile device 2a is substantially similar to the operation of the mobile device 2a according to the first exemplary embodiment of the present invention, the detailed description thereof will be omitted.

Furthermore, since the plurality of accessible servers 21 are present, the AVN 1a may be configured to select whether to access any server 21. The operation of the AVN 1a will be described with reference to FIG. 5 while focusing on the difference from FIG. 3. The AVN 1a may be configured to determine whether the communication network is sensed by searching for the surrounding networks (S22). When the communication network is sensed ('Yes' of S22), the AVN 1a may be configured to determine whether a plurality of communication networks are present (S40). When one communication network is present around the AVN 1a, the AVN 1a may be configured to select the server 21 that corresponds to the sensed communication network (S41). The selection may be automatically performed. Alternately, only one server 21 may be listed to be displayed and the access to the server 21 may be then initiated only when the user selects the server 21.

When the plurality of communication networks are present around the AVN 1a, the AVN 1a may be configured to select any one server 21 among the plurality of communication networks (S42). In other words, the AVN 1a may be configured to select the server 21 to receive the content pages. The selection may be performed by the passenger manipulation. In particular, information for the selectable server 21 may be listed to be displayed on the AVN display unit 14 of the AVN 1a. For example, information may be the model of the mobile device 2a having the server 21 mounted therein, a user name, identification ID, and the like. In addition, to display information, when the mobile device 2a or the server 21 provides the communication network via the terminal communication unit 23, identifying information may also be provided. Since S23 through S32 are the same as those of FIG. 3, the description thereof will be omitted.

As described above, since the AVN 1a may be configured to selectively access the plurality of servers 21, a range of the content capable of being used may be further increased in addition to the effect obtained from the first exemplary embodiment of the present invention. For example, when a plurality of passengers are present in the vehicle, the mobile device 2a of the other passenger may also access the AVN 1a, thereby making it possible to utilize various content.

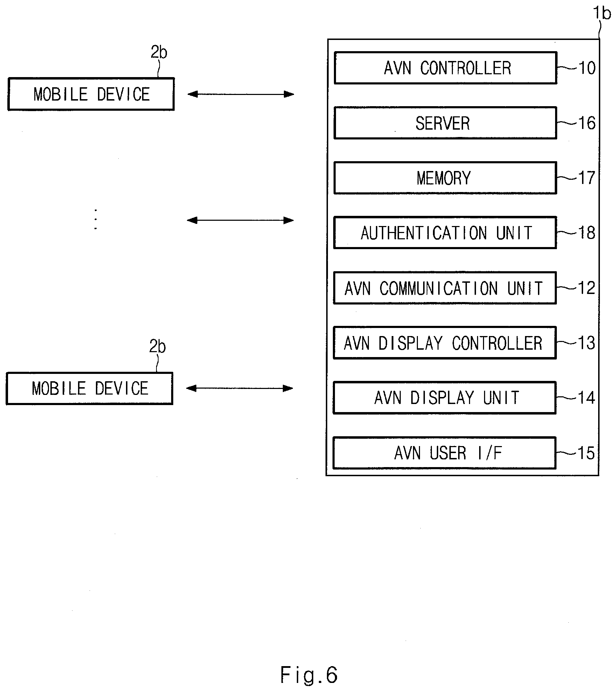

FIG. 6 is an exemplary block diagram showing a configuration of a system according to a third exemplary embodiment of the present invention. Referring to FIG. 6, the present AVN system may include an AVN 1b that includes the server 21 and a plurality of mobile devices 2b. That is, FIG. 6 represents when the server 21 is included in the AVN 1b.

In the present exemplary embodiment, the AVN 1b may further include a server 16, a memory 17, and an authentication unit 18 in addition to the AVN controller 10, the AVN communication unit 12, the AVN display controller 13, the AVN display unit 14, and the AVN user I/F 15. Functions and operations of the server 16, the memory 17, and the authentication unit 18 are substantially similar to those of the server 21, the memory 22, and the authentication unit 24 included in the mobile device 2a. Since the server 16 may be mounted within an AVN 10b to be mounted within the vehicle, security with respect to the vehicle control may be further improved.

Moreover, although the above exemplary embodiments describes the configuration in which the servers 21 and 16 are included in only one of the mobile device 2a and the AVN 1b, the present invention is not limited thereto and the servers 21 and 16 may be simultaneously included in both the mobile device 2a and the AVN 1b for the vehicle in the system. In addition, the method according to the exemplary embodiment of the present invention as described above may be created with a computer program. Codes and code segments configuring the computer program may be easily deduced by computer programmers in the art. In addition, the created computer program may be stored in computer readable recording media (information storage media) and is read and executed by computers, thereby making it possible to implement the methods according to the present invention. In addition, the recording media include all types of recording media capable of being read by the computer.

According to the exemplary embodiment of the present invention, the AVN and the mobile device in which the user may more easily and safely use the contents of the server regardless of the operating system of the AVN or the mobile device may be provided.

The present invention described above may be variously substituted, altered, and modified by those skilled in the art to which the present invention pertains without departing from the scope of the present invention. Therefore, the present invention is not limited to the above-mentioned exemplary embodiments and the accompanying drawings.

### SYMBOL OF EACH OF THE ELEMENTS IN THE FIGURES

- 1a:: AVN FOR VEHICLE
- 2a:: MOBILE DEVICE
- 2b:: MOBILE DEVICE
- 10:: AVN CONTROLLER
- 11:: NETWORK SEARCHING UNIT
- 12:: AVN COMMUNICATIONS UNIT
- 13:: AVN DISPLAY CONTROLLER
- 14:: AVN DISPLAY UNIT
- 15:: AVN USER I/F
- 16:: SERVER
- 17:: MEMORY
- 18:: AUTHENTICATION UNIT
- 20:: TERMINAL CONTROLLER
- 21:: SERVER
- 22:: MEMORY
- 23:: TERMINAL COMMUNICATIONS UNIT
- 24:: AUTHENTICATION UNIT
- 25:: TERMINAL DISPLAY CONTROLLER
- 26:: TERMINAL DISPLAY UNIT
- 27:: TERMINAL USER I/F
- S10:: OPERATE SERVER
- S11:: PROVIDE COMMUNICATIONS NETWORK
- S12:: EXTERNAL DEVICE ACCESS?
- S13:: PERFORM AUTHENTICATION
- S14:: PERMITTED DEVICE?
- S15:: PROVIDE CONTENTS PAGES ACCORDING TO AUTHENTICATION RESULT
- S16:: EVENT SENSE?
- S17:: PERFROM OPERATION ACCORDING TO EVENT
- S20:: PERFORM BROWSER
- S21:: SEARCH FOR NETWORK
- S22:: COMMUNICATIONS NETWORK SENSE?
- S23:: ACCESS SERVER THROUGH HTTPS
- S24:: PERFORM AUTHENTICATION
- S25:: AUTHENTICATION IS SUCCESSFUL?
- S26:: DISPLAY CONTENTS PAGES THROUGH BROWSER
- S27:: USER MANIPULATION?
- S28:: TRANSMIT CONTROLLING SIGNAL
- S29:: RECEIVE CONTENTS
- S30:: USE RECEIVED CONTENTS
- S31:: VEHICLE MANIPULATING SIGNAL RECEIVES?
- S32:: CONTROL VEHICLE
- S40: A: PLURALITY OF COMMUNICATIONS NETWORKS ARE PRESENT?
- S41:: SELECT SERVER FOR SENSED COMMUNICATIONS NETWORK
- S42:: SELECT SERVER FOR ANY ONE COMMUNICATIONS NETWORK AMONG A PLURALITY OF COMMUNICATIONS NETWORKS

## Claims

1. An audio, video and navigation, AVN, (1) for a vehicle installed within the vehicle, the AVN (1) for a vehicle comprising:
a memory (17) configured to store program instructions; and
a processor (10) configured to execute the program instructions, the program instructions when executed configured to:
search for a network around the AVN (1);
request a server (16) to transmit content pages created by hypertext markup language HTML5 via the network and receive the content pages in response to the request;
provide a browser for displaying the content pages; and
display the content pages,
wherein the AVN (1) is configured to use content on the content pages transmitted from the server (16), and
the AVN (1) is configured to provide information for authentication to the server (16) to receive the content pages from the server (16),
wherein the server provides different content pages based on an authentication result for the AVN.

2. The AVN (1) for a vehicle according to claim 1, wherein the program instructions when executed are further configured to transmit the request together with information regarding any one of an application used in the AVN (1), the vehicle, or the AVN (1) at the time of the request of transmission of the content pages to the server (16).

3. The AVN (1) for a vehicle according to claim 1, wherein the server communication is via a hypertext transfer protocol secure HTTPS protocol.

4. The AVN (1) for a vehicle according to claim 1, wherein the program instructions when executed are further configured to transmit a controlling signal generated via a user interface UI (15) provided from the content pages based on manipulation of a user to the server (16), and receive content pages or content changed based on a request signal from the server (16).

5. The AVN (1) for a vehicle according to claim 1, further comprising a vehicle controller configured to operate the vehicle based on a received manipulating signal.

6. Amobile device, comprising:
a server (21) configured to provide content pages created by hypertext markup language HTML5 characteristics;
a memory (22) configured to store content usable through the content pages and to store program instructions; and
a processor (25) configured to execute the program instructions, the program instructions when executed configured to:
transmit and receive data to and from an external device;
determine whether the request is generated through a permitted application or device when receiving a request of the content pages from the external device; and
in response to determining that the request is generated by the permitted application or device, transmit the content pages to the external device, and transmit the content stored in the memory (22) to the external device based on a user controlling signal on the content pages,
wherein the server provides different content pages based on a security level of the external device.

7. The mobile device according to claim 6, wherein the processor (25) is configured to provide the Internet network accessible to the server (21) from the external device.

8. The mobile device according to claim 6, wherein the server (21) is configured to transmit different content pages to the external device based on an authentication result.

9. An audio, video and navigation AVN (1) for a vehicle installed within the vehicle, the AVN (1) comprising:
a server (16) configured to provide content pages created by hypertext markup language HTML5 characteristics;
a memory (17) configured to store content usable through the content pages and store program instructions;
a display controller (13) configured to provide a browser to display the content pages; and
a display unit (14) configured to display the content pages,
wherein the AVN (1) is configured to use content on the content pages transmitted from the server (16), and
the server provides different content pages based on a security level of the AVN.

10. The AVN (1) for a vehicle according to claim 9, further comprising:
a processor (10) configured to execute the program instructions, the program instructions when executed configured to:
provide the Internet network accessible to the server (16) from an external device;
transmit and receive various controlling signals and data via the Internet network;
determine whether the request is generated through a permitted application or device when receiving a request of the content pages from the external device; and
in response to determining that the request is generated by the permitted application or device, transmit the content pages to the external device, and transmit the content stored in the memory (17) to the external device based on a user controlling signal on the content pages.

11. A non-transitory computer readable medium containing program instructions executed by a processor (10), the computer readable medium comprising:
program instructions that search for a network around an audio, video and navigation AVN for a vehicle;
program instructions that request a server (16) to transmit content pages via the network and
receive the content pages in response to the request;
program instructions that provide a browser for displaying the content pages; and
program instructions that display the content pages,
wherein the AVN (1) is configured to use content on the content pages transmitted from the server (16), and
the AVN (1) is configured to provide information for authentication to the server (16) to receive the content pages from the server (16), and
the server provides different content pages based on an authentication result for the AVN.

12. The non-transitory computer readable medium of claim 11, further comprising:
program instructions that transmit the request together with information regarding any one of an application used in the AVN (1), the vehicle, or the AVN (1) at the time of the request of transmission of the content pages to the server (16).

13. The non-transitory computer readable medium of claim 11, wherein the server communication is via a hypertext transfer protocol secure HTTPS protocol.

14. The non-transitory computer readable medium of claim 11, further comprising:
program instructions that transmit a controlling signal generated via a user interface UI (15) provided from the content pages based on manipulation of a user to the server (16), and receive content pages or content changed based on a request signal from the server (16).

## Patentansprüche

1. Audio, Video und Navigation (AVN) (1) für ein Fahrzeug, das in dem Fahrzeug installiert ist, wobei das AVN (1) für ein Fahrzeug Folgendes umfasst:
einen Speicher (17), der dafür ausgebildet ist,
Programmbefehle zu speichern; und
einen Prozessor (10), der dafür ausgebildet ist, die Programmbefehle auszuführen, wobei die Programmbefehle,
wenn sie ausgeführt werden, ausgebildet sind zum:
Suchen nach einem Netzwerk in der Umgebung des AVN (1);
Auffordern eines Servers (16), die durch Hypertext Markup Language (HTML5) erzeugten Inhaltsseiten über das Netzwerk zu senden und die Inhaltsseiten in Reaktion auf die Anforderung zu empfangen;
Bereitstellen eines Browsers zum Anzeigen der Inhaltsseiten; und
Anzeigen der Inhaltsseiten,
wobei das AVN (1) dafür ausgebildet ist, Inhalte auf den von dem Server (16) gesendeten Inhaltsseiten zu verwenden,
und
das AVN (1) dafür ausgebildet ist, Informationen zum Authentifizieren an den Server (16) zu übermitteln, um die Inhaltsseiten von dem Server (16) zu empfangen,
wobei der Server verschiedene Inhaltsseiten auf der Basis eines Authentifizierungsergebnisses für das AVN bereitstellt.

2. AVN (1) für ein Fahrzeug nach Anspruch 1, wobei die Programmbefehle, wenn sie ausgeführt werden, des Weiteren dafür ausgebildet sind, die Anforderung zusammen mit Informationen bezüglich eines von einer Anwendung, die in der AVN (1) verwendet wird, des Fahrzeugs oder des AVN (1), zum Zeitpunkt der Anforderung der Übertragung der Inhaltsseiten an den Server (16) zu senden.

3. AVN (1) für ein Fahrzeug nach Anspruch 1, wobei die Serverkommunikation über ein Hypertext Transfer Protocol Secure (HTTPS)-Protokoll erfolgt.

4. AVN (1) für ein Fahrzeug nach Anspruch 1, wobei die Programmbefehle, wenn sie ausgeführt werden, des Weiteren dafür ausgebildet sind, ein über eine Nutzerschnittstelle (User Interface, UI) (15) generiertes Steuerungssignal, das von den Inhaltsseiten auf der Basis der Manipulation eines Nutzers bereitgestellt wird, an den Server (16) zu senden und Inhaltsseiten oder Inhalte zu empfangen, die auf der Basis eines Anforderungssignals von dem Server (16) verändert wurden.

5. AVN (1) für ein Fahrzeug nach Anspruch 1, das des Weiteren eine Fahrzeugsteuereinheit umfasst, die dafür ausgebildet ist, das Fahrzeug auf der Basis eines empfangenen Manipulationssignals zu betreiben.

6. Mobile Vorrichtung, umfassend:
einen Server (21), der dafür ausgebildet ist,
Inhaltsseiten bereitzustellen, die durch Hypertext Markup Language (HTML5)-Eigenschaften erzeugt wurden;
einen Speicher (22), der dafür ausgebildet ist, Inhalte zu speichern, die durch die Inhaltsseiten verwendet werden können, und Programmbefehle zu speichern; und
einen Prozessor (25), der dafür ausgebildet ist, die Programmbefehle auszuführen, wobei die Programmbefehle,
wenn sie ausgeführt werden, ausgebildet sind zum:
Senden und Empfangen von Daten zu bzw. von einer externen Vorrichtung;
Bestimmen, ob die Anforderung durch eine zulässige Anwendung oder Vorrichtung generiert wurde, wenn eine Anforderung der Inhaltsseiten von der externen Vorrichtung empfangen wird; und
in Reaktion auf das Bestimmen, dass die Anforderung durch die zulässige Anwendung oder Vorrichtung generiert wurde,
Senden der Inhaltsseiten an die externe Vorrichtung und
Senden der in dem Speicher (22) gespeicherten Inhalte an die externe Vorrichtung auf der Basis eines Nutzer-Steuerungssignals auf den Inhaltsseiten,
wobei der Server verschiedene Inhaltsseiten auf der Basis einer Sicherheitsstufe der externen Vorrichtung bereitstellt.

7. Mobile Vorrichtung nach Anspruch 6, wobei der Prozessor (25) dafür ausgebildet ist, das Internet-Netz, auf das der Server (21) zugreifen kann, von der externen Vorrichtung bereitzustellen.

8. Mobile Vorrichtung nach Anspruch 6, wobei der Server (21) dafür ausgebildet ist, verschiedene Inhaltsseiten an die externe Vorrichtung auf der Basis eines Authentifizierungsergebnisses zu senden.

9. Audio, Video und Navigation AVN (1) für ein Fahrzeug, das in dem Fahrzeug installiert ist, wobei das AVN (1) Folgendes umfasst:
einen Server (16), der dafür ausgebildet ist,
Inhaltsseiten bereitzustellen, die durch Hypertext Markup Language (HTML5)-Eigenschaften erzeugt wurden;
einen Speicher (17), der dafür ausgebildet ist, Inhalte zu speichern, die durch die Inhaltsseiten verwendet werden können, und Programmbefehle zu speichern;
eine Anzeigsteuereinheit (13), die dafür ausgebildet ist,
einen Browser bereitzustellen, um die Inhaltsseiten anzuzeigen; und
eine Anzeigeeinheit (14), die dafür ausgebildet ist, die Inhaltsseiten anzuzeigen,
wobei das AVN (1) dafür ausgebildet ist, Inhalte auf den von dem Server (16) gesendeten Inhaltsseiten zu verwenden,
und
der Server verschiedene Inhaltsseiten auf der Basis einer Sicherheitsstufe des AVN bereitstellt.

10. AVN (1) für ein Fahrzeug nach Anspruch 9, des Weiteren umfassend:
einen Prozessor (10), der dafür ausgebildet ist, die Programmbefehle auszuführen, wobei die Programmbefehle,
wenn sie ausgeführt werden, ausgebildet sind zum:
Bereitstellen des Internet-Netzes, das für den Server (16) zugänglich ist, von einer externen Vorrichtung;
Senden und Empfangen verschiedener Steuerungssignale und
Daten über das Internet-Netz;
Bestimmen, ob die Anforderung durch eine zulässige Anwendung oder Vorrichtung generiert wurde, wenn eine Anforderung der Inhaltsseiten von der externen Vorrichtung empfangen wurde; und
in Reaktion auf das Bestimmen, dass die Anforderung durch die zulässige Anwendung oder Vorrichtung generiert wurde,
Senden der Inhaltsseiten an die externe Vorrichtung und
Senden der in dem Speicher (17) gespeicherten Inhalte an die externe Vorrichtung auf der Basis eines Nutzer-Steuerungssignals auf den Inhaltsseiten.

11. Nicht-transitorisches computerlesbares Medium, das Programmbefehle enthält, die durch einen Prozessor (10) ausgeführt, wobei das computerlesbare Medium Folgendes umfasst:
Programmbefehle, die nach einem Netzwerk in der Umgebung eines Audio, Video und Navigation (AVN) für ein Fahrzeug suchen;
Programmbefehle, die einen Server (16) auffordern, Inhaltsseiten über das Netzwerk zu senden und die Inhaltsseiten in Reaktion auf die Anforderung zu empfangen;
Programmbefehle, die einen Browsers zum Anzeigen der Inhaltsseiten bereitstellen; und
Programmbefehle, welche die Inhaltsseiten anzeigen, wobei das AVN (1) dafür ausgebildet ist, Inhalte auf den von dem Server (16) gesendeten Inhaltsseiten zu verwenden, und
das AVN (1) dafür ausgebildet ist, Informationen zur Authentifizierung an den Server (16) zu übermitteln, um die Inhaltsseiten von dem Server (16) zu empfangen, und
der Server verschiedene Inhaltsseiten auf der Basis eines Authentifizierungsergebnisses für das AVN bereitstellt.

12. Nicht-transitorisches computerlesbares Medium nach Anspruch 11, des Weiteren umfasssend:
Programmbefehle, welche die Anforderung zusammen mit Informationen bezüglich eines von einer Anwendung, die in der AVN (1) verwendet wird, des Fahrzeugs oder des AVN (1) zum Zeitpunkt der Anforderung der Übertragung der Inhaltsseiten an den Server (16) senden.

13. Nicht-transitorisches computerlesbares Medium nach Anspruch 11, wobei die Serverkommunikation über ein Hypertext Transfer Protocol Secure (HTTPS)-Protokoll erfolgt.

14. Nicht-transitorisches computerlesbares Medium nach Anspruch 11, des Weiteren umfassend:
Programmbefehle, die ein über eine Nutzerschnittstelle (User Interface, UI) (15) generiertes Steuerungssignal, das von den Inhaltsseiten auf der Basis der Manipulation eines Nutzers bereitgestellt wird, an den Server (16) senden und Inhaltsseiten oder Inhalte empfangen, die auf der Basis eines Anforderungssignals von dem Server (16) verändert wurden.

## Revendications

1. Système audio, vidéo et de navigation AVN (1) pour un véhicule installé à l'intérieur du véhicule, l'AVN (1) pour un véhicule comprenant :
une mémoire (17) configurée pour stocker des instructions de programme ; et
un processeur (10) configuré pour exécuter les instructions de programme, les instructions de programme,
lorsqu'elles sont exécutées, étant configurées pour :
rechercher un réseau autour de l'AVN (1) ;
demander à un serveur (16) de transmettre des pages de contenu créées par le langage de balisage hypertexte HTML5 par l'intermédiaire du réseau et recevoir les pages de contenu en réponse à la demande ;
fournir un navigateur pour afficher les pages de contenu ;
et
afficher les pages de contenu,
dans lequel l'AVN (1) est configuré pour utiliser le contenu sur les pages de contenu transmises à partir du serveur (16), et
l'AVN (1) est configuré pour fournir des informations d'authentification au serveur (16) pour recevoir les pages de contenu à partir du serveur (16),
dans lequel le serveur fournit différentes pages de contenu sur la base d'un résultat d'authentification pour l'AVN.

2. AVN (1) pour un véhicule selon la revendication 1, dans lequel les instructions de programme, lorsqu'elles sont exécutées, sont en outre configurées pour transmettre la demande conjointement avec des informations concernant l'un quelconque d'une application utilisée dans l'AVN (1), du véhicule ou de l'AVN (1) au moment de la demande de transmission des pages de contenu au serveur (16).

3. AVN (1) pour un véhicule selon la revendication 1, dans lequel la communication de serveur est effectuée par l'intermédiaire d'un protocole de transfert hypertexte sécurisé HTTPS.

4. AVN (1) pour un véhicule selon la revendication 1, dans lequel les instructions de programme, lorsqu'elles sont exécutées, sont en outre configurées pour transmettre un signal de commande généré par l'intermédiaire d'une interface utilisateur UI (15) fournie à partir des pages de contenu sur la base d'une manipulation d'un utilisateur au serveur (16), et recevoir des pages de contenu ou un contenu modifié sur la base d'un signal de demande à partir du serveur (16).

5. AVN (1) pour un véhicule selon la revendication 1, comprenant en outre un contrôleur de véhicule configuré pour faire fonctionner le véhicule sur la base d'un signal de manipulation reçu

6. Dispositif mobile, comprenant :
un serveur (21) configuré pour fournir des pages de contenu créées par des caractéristiques de langage de balisage hypertexte HTML5 ;
une mémoire (22) configurée pour stocker un contenu utilisable via les pages de contenu et pour stocker des instructions de programme ; et
un processeur (25) configuré pour exécuter les instructions de programme, les instructions de programme,
lorsqu'elles sont exécutées, étant configurées pour :
transmettre et recevoir des données vers et depuis un dispositif externe ;
déterminer si la demande est générée via une application ou un dispositif autorisé lors de la réception d'une demande des pages de contenu à partir du dispositif externe ; et
en réponse à la détermination que la demande est générée par l'application ou le dispositif autorisé, transmettre les pages de contenu au dispositif externe, et transmettre le contenu stocké dans la mémoire (22) au dispositif externe sur la base d'un signal de commande d'utilisateur sur les pages de contenu,
dans lequel le serveur fournit différentes pages de contenu sur la base d'un niveau de sécurité du dispositif externe.

7. Dispositif mobile selon la revendication 6, dans lequel le processeur (25) est configuré pour fournir le réseau Internet accessible au serveur (21) à partir du dispositif externe.

8. Dispositif mobile selon la revendication 6, dans lequel le serveur (21) est configuré pour transmettre différentes pages de contenu au dispositif externe sur la base d'un résultat d'authentification.

9. Système audio, vidéo et de navigation, AVN, (1) pour un véhicule installé dans le véhicule, l'AVN (1) comprenant :
un serveur (16) configuré pour fournir des pages de contenu créées par des caractéristiques de langage de balisage hypertexte HTML5 ;
une mémoire (17) configurée pour stocker un contenu utilisable via les pages de contenu et pour stocker des instructions de programme ;
un contrôleur d'affichage (13) configuré pour fournir un navigateur pour afficher les pages de contenu ; et
une unité d'affichage (14) configurée pour afficher les pages de contenu,
dans lequel l'AVN (1) est configuré pour utiliser le contenu sur les pages de contenu transmises à partir du serveur (16), et
le serveur fournit différentes pages de contenu sur la base d'un niveau de sécurité de l'AVN.

10. AVN (1) pour un véhicule selon la revendication 9, comprenant en outre :
un processeur (10) configuré pour exécuter les instructions de programme, les instructions de programme,
lorsqu'elles sont exécutées, étant configurées pour :
fournir le réseau Internet accessible au serveur (16) à partir d'un dispositif externe ;
transmettre et recevoir divers signaux de commande et
données par l'intermédiaire du réseau Internet ;
déterminer si la demande est générée via une application ou un dispositif autorisé lors de la réception d'une demande des pages de contenu à partir du dispositif externe ; et
en réponse à la détermination que la demande est générée par l'application ou le dispositif autorisé, transmettre les pages de contenu au dispositif externe, et transmettre le contenu stocké dans la mémoire (17) au dispositif externe sur la base d'un signal de commande d'utilisateur sur les pages de contenu.

11. Support lisible par ordinateur non transitoire contenant des instructions de programme exécutées par un processeur (10), le support lisible par ordinateur comprenant :
des instructions de programme qui recherchent un réseau autour d'un système audio, vidéo et de navigation, AVN,
pour un véhicule ;
des instructions de programme qui demandent à un serveur (16) de transmettre des pages de contenu par l'intermédiaire du réseau et de recevoir les pages de contenu en réponse à la demande ;
des instructions de programme qui fournissent un navigateur pour afficher les pages de contenu ; et
des instructions de programme qui affichent les pages de contenu,
dans lequel l'AVN (1) est configuré pour utiliser le contenu sur les pages de contenu transmises à partir du serveur (16), et
l'AVN (1) est configuré pour fournir des informations d'authentification au serveur (16) pour recevoir les pages de contenu à partir du serveur (16), et
le serveur fournit différentes pages de contenu sur la base d'un résultat d'authentification pour l'AVN.

12. Support lisible par ordinateur non transitoire selon la revendication 11, comprenant en outre :
des instructions de programme qui transmettent la demande conjointement avec des informations concernant l'un quelconque d'une application utilisée dans l'AVN (1), du véhicule ou de l'AVN (1) au moment de la demande de transmission des pages de contenu au serveur (16).

13. Support lisible par ordinateur non transitoire selon la revendication 11, dans lequel la communication de serveur est effectuée par l'intermédiaire d'un protocole de transfert hypertexte sécurisé, HTTPS.

14. Support lisible par ordinateur non transitoire selon la revendication 11, comprenant en outre :
des instructions de programme qui transmettent un signal de commande généré par l'intermédiaire d'une interface utilisateur UI (15) fournie à partir des pages de contenu sur la base d'une manipulation d'un utilisateur au serveur (16), et reçoivent des pages de contenu ou un contenu modifié sur la base d'un signal de demande à partir du serveur (16).
